# EUROPÄISCHE PATENTSCHRIFT

(11) **EP 2 256 382 B1**
(45) Veröffentlichungstag und Bekanntmachung des Hinweises auf die Patenterteilung: **02.05.2012**
(21) Anmeldenummer: 10005396.6
(22) Anmeldetag: 05.05.2009
(51) Int. Cl.: F16J 15/32

(54) **Dichtungsanordnung**
Seal arrangement
Agencement d'étanchéification

(43) Veröffentlichungstag der Anmeldung: 01.12.2010
(62) Teilanmeldung aus: 09006122.7
(73) Patentinhaber: Carl Freudenberg KG, 69469 Weinheim (DE)
(72) Erfinder: Colineau, François, 69469 Weinheim (DE); Hintenlang, Günter, 69518 Abtsteinach (DE)

(56) Entgegenhaltungen:
- EP-A1- 0 908 650
- EP-A1- 1 921 355
- DE-A1- 3 838 760
- DE-A1- 10 325 254
- DE-A1-102004 012 221

## Beschreibung

### Technisches Gebiet

Die Erfindung betrifft eine Dichtungsanordnung, umfassend einen Dichtring, der stirnseitig einerseits eine erste Dichtlippe aufweist, die eine Durchbrechung umschließt, wobei die Durchbrechung von einem Verschlussdeckel verschlossen ist, wobei der Verschlussdeckel der ersten Dichtlippe unmittelbar benachbart und berührungsfrei zugeordnet ist.

### Stand der Technik

Derartige Dichtungsanordnungen sind allgemein bekannt, zum Beispiel aus der DE 10 2004 012 221 A1. Der Dichtring weist einen C-förmigen Stützkörper auf, der eine in axialer Richtung offene C-förmige Ausnehmung begrenzt. In die C-förmige Ausnehmung ist ein mehrteiliger Deckel mit einem Axialflansch kraftschlüssig eingepresst.

Die Dichtungsanordnungen sind in Maschinenelementen, beispielsweise in Bohrungen von Getriebegehäusen, eingesetzt, wobei der Verschlussdeckel der Dichtungsanordnung dafür sorgt, dass Verunreinigungen, zum Beispiel während des Transports des Maschinenelements oder dessen Lagerung, aus dem abzudichtenden Raum fern gehalten werden. Außerdem soll durch den Verschlussdeckel zum Beispiel Öl, das in den abzudichtenden Raum eingefüllt ist, während des Transports darin zurückgehalten werden.
Dabei ist allerdings zu beachten, dass der Verschlussdeckel die erste Dichtlippe berührt und die erste Dichtlippe dadurch verformt und / oder aufgedehnt wird. Dadurch besteht die Gefahr, dass der Werkstoff, aus dem die erste Dichtlippe besteht, relaxiert und / oder die Form der ersten Dichtlippe nachteilig verändert wird. Im Anschluss an die Entfernung des Verschlussdeckels wird zum Beispiel eine abzudichtende Welle in die Durchbrechung eingeführt, wobei die Welle, wegen der aufgedehnten ersten Dichtlippe, nicht mehr ausreichend geführt und vorzentriert wird und dadurch eine axial hinter der ersten Dichtlippe angeordnete zweite Dichtlippe während der Montage der Welle beschädigt werden kann. Außerdem kann es durch die Verformung/Aufdehnung der ersten Dichtlippe, von der die abzudichtende Welle unter elastischer Vorspannung dichtend umschlossen werden soll, zu Undichtigkeiten kommen.

Aus der EP 0 908 650 B1 ist eine Dichtungsanordnung mit einem Dichtring für eine Welle oder Stange bekannt, wobei der Dichtring einen Stützkörper umfasst, der mit einer sich quer zu einer Welle oder Stange erstreckenden Wand verschraubbar ist. Der Dichtring besteht aus einem polymeren Werkstoff, wobei der Stützkörper und der Dichtring vor der Verschraubung mittels eines abnehmbaren Zentrierrings durch die Welle oder Stange zentrierbar ist. Der Dichtring ist mit einer umlaufenden Zentrierfläche und der Zentrierring mit zumindest einer dazu passenden Gegenfläche versehen, wobei die Zentrierfläche und die Gegenfläche trichterartig ineinander einfügbar sind. Der Zentrierring und der Dichtring sind mittels einer Schnappverbindung unverlierbar aneinander festlegbar. Durch den Zentrierring wird eine konzentrische Zuordnung des Dichtrings zur abzudichtenden Welle oder Stange sichergestellt und kontrolliert.

### Darstellung der Erfindung

Der Erfindung liegt die Aufgabe zugrunde, dass die zuvor genannten Nachteile vermieden werden, insbesondere dass die erste Dichtlippe durch den Verschlussdeckel weder verformt noch aufgedehnt werden soll und dass die Montage der Dichtungsanordnung vereinfacht und dadurch eine große Prozesssicherheit gewährleistet ist.

Diese Aufgabe wird erfindungsgemäß durch eine Dichtungsanordnung nach Anspruch 1.
Auf vorteilhafte Ausgestaltungen nehmen die Unteransprüche Bezug.

Zur Lösung der Aufgabe ist eine Dichtungsanordnung vorgesehen, wie eingangs beschrieben, wobei die erste Dichtlippe aus PTFE besteht und zur Vorzentrierung eines abzudichtenden Bauteils bei dessen Montage herstellungsbedingt eben und kreisringförmig ausgebildet ist und sich parallel zum Radialflansch erstreckt, wobei der Verschlussdeckel und der Dichtring formschlüssig miteinander verbunden sind und wobei der Dichtring einen sich in axialer Richtung erstreckenden Axialflansch aufweist, der den Verschlussdeckel aussenumfangsseitig umschließt und zumindest einen sich radial nach innen erstreckenden Rastvorsprung aufweist, der zumindest in eine Hinterschneidung des Verschlussdeckels einschnappbar ist.

Die erste Dichtlippe besteht aus PTFE und ist herstellungsbedingt eben und kreisringförmig ausgebildet und erstreckt sich parallel zum Radialflansch. An keiner Stelle berührt der Verschlussdeckel die erste Dichtlippe.
Im Anschluss an die Entfernung des Verschlussdeckels kann eine abzudichtende Welle durch die Durchbrechung hindurchgeführt werden, wobei während des Montagevorgangs die herstellungsbedingt ebene und radial nach innen gerichtete erste Dichtlippe die Welle zunächst, bezogen auf die Dichtungsanordnung, vorzentriert und dann trompetenförmig in axialer Richtung verformt wird. Anschließend umschließt die erste Dichtlippe die abzudichtende Oberfläche der abzudichtenden Welle dichtend.

Durch die berührungsfreie Zuordnung des Verschlussdeckels zur ersten Dichtlippe kann die erste Dichtlippe durch den Verschlussdeckel weder verformt noch aufgedehnt werden. Die erste Dichtlippe behält in der Dichtungsanordnung solange ihre herstellungsbedingte Form, bis das abzudichtende Bauteil, z.B. eine Welle, montiert und von der ersten Dichtlippe anschließend dichtend umschlossen ist.
Vor der Montage des abzudichtenden Bauteils wird der Verschlussdeckel aus der Dichtungsanordnung entfernt.
Zuvor hat der Verschlussdeckel während des Transports oder der Lagerung, beispielsweise eines Getriebegehäuses, dafür gesorgt, dass durch die Bohrung, durch die später eine Welle verläuft, keine Verunreinigungen in den abzudichtenden Raum gelangen.

Während der Montage einer abzudichtenden Welle wird diese in die Durchbrechung eingeführt und durch die erste Dichtlippe vorzentriert. Dadurch nimmt die Welle eine günstige Position bezogen auf eine zweite Dichtlippe ein, die der ersten Dichtlippe in Montagerichtung benachbart zugeordnet ist. Die Gefahr einer Beschädigung der zweiten Dichtlippe ist durch die Vorzentrierung weit reduziert.

Bei montierter Welle berührt die erste Dichtlippe die abzudichtende Oberfläche der abzudichtenden Welle dann mit gleichmäßigem Anpressdruck entlang des gesamten Umfangs, so dass der Dichtring während seiner bestimmungsgemäßen Verwendung ausgezeichnete Gebrauchseigenschaften während einer langen Gebrauchsdauer aufweist.

Der Verschlussdeckel und der Dichtring sind formschlüssig miteinander verbunden. Eine formschlüssige Verbindung ist, im Vergleich zu einer kraftschlüssigen Verbindung, von Vorteil, weil die Montage der Dichtungsanordnung dadurch vereinfacht ist. Sind der Verschlussdeckel und der Dichtring formschlüssig miteinander verbunden, besteht keine Ungewissheit, ob die beiden Teile tatsächlich ordnungsgemäß haltbar aneinander festgelegt sind. Bei kraftschlüssigen Verbindungen hängt die Haltbarkeit der Verbindung demgegenüber von der Kraft ab, mit dem die beiden Teile ineinander gefügt werden. Differiert die Fügekraft, resultiert daraus eine mehr oder weniger haltbare Verbindung, was im Hinblick auf die Prozesssicherheit nachteilig ist.

Der Dichtring weist einen sich in axialer Richtung erstreckenden Axialflansch auf, der den Verschlussdeckel außenumfangsseitig umschließt und zumindest einen sich radial nach innen erstreckenden Rastvorsprung aufweist, der zumindest in eine Hinterschneidung des Verschlussdeckels einschnappbar ist. Am Axialflansch kann am freien stirnseitigen Ende eine Axialdichtlippe angeordnet sein. Der Rastvorsprung kann durch einen umfangsseitig umlaufenden, in sich geschlossenen Wulst gebildet sein, der in eine umfangsseitig umlaufende, in sich geschlossene nutförmige Hinterschneidung des Verschlussdeckels einschnappt. Der Verschlussdeckel ist dadurch während der Herstellung der Dichtungsanordnung leicht mit dem Dichtring zu verbinden und später, auch wieder leicht zu trennen.

Der Verschlussdeckel und der Dichtring können zerstörungsfrei lösbar miteinander verbunden sein. Hierbei ist von Vorteil, dass der Dichtring bei Entfernung des Verschlussdeckels aus der Dichtungsanordnung dadurch nicht beschädigt wird. Außerdem kann der Verschlussdeckel anschließend sortenrein entsorgt und recycelt werden.

Der Verschlussdeckel besteht bevorzugt aus einem polymeren Werkstoff. Dadurch ist er leicht und rostfrei.

Der Axialflansch kann in Montagerichtung des Verschlussdeckels eine Einführschräge aufweisen. Dadurch wird die Zentrierung des Verschlussdeckels relativ zum Dichtring weiter vereinfacht, ebenso wie die Montage der Dichtungsanordnung. Die Einführungsschräge bildet außerdem eine erste Vorzentrierung bei Montage des abzudichtenden Maschinenelements in den Dichtring, bevor eine zweite Vorzentrierung durch die erste Dichtlippe erfolgt. Eine in Montagerichtung des Maschinenelements axial nach der ersten Dichtlippe angeordnete zweite Dichtlippe wird dadurch vor montagebedingten Beschädigungen gut geschützt.

Der Axialflansch kann aus einem elastomeren Werkstoff bestehen.

Der Verschlussdeckel kann einen Radialflansch aufweisen, mit dem der Verschlussdeckel im Axialflansch des Dichtrings gehalten ist, wobei der Radialflansch der ersten Dichtlippe mit einem ersten axialen Abstand > 0 benachbart zugeordnet ist. Der Radialflansch verschließt die Durchbrechung, ohne die erste Dichtlippe zu berühren und ohne die erste Dichtlippe zu verformen, so dass eine unerwünschte Verformung/Aufdehnung der ersten Dichtlippe durch den Verschlussdeckel ausgeschlossen ist.

Der erste axiale Abstand kann bevorzugt 0,1 mm bis 1 mm betragen. Bei einem derartigen ersten axialen Abstand ist von Vorteil, dass dadurch einerseits sichergestellt ist, dass der Verschlussdeckel die erste Dichtlippe nicht berührt und andererseits die Dichtungsanordnung trotzdem insgesamt geringe Abmessungen in axialer Richtung aufweist.

Polymere Werkstoffe reagieren bezüglich ihrer Rückstellung in die herstellungsbedingte Form empfindlicher auf Verformungen und / oder Aufdehnungen, als elastomere Werkstoffe, so dass die berührungsfreie Zuordnung des Verschlussdeckels zur ersten Dichtlippe speziell dann besonders vorteilhaft ist, wenn die Dichtlippe aus einem polymeren Werkstoff besteht. Werden polymere Werkstoffe längere Zeit im verformten Zustand gehalten und / oder aufgedehnt, kehren sie nur schwer, wenn überhaupt, in ihre herstellungbedingte Form zurück, was dann zu einer nur ungenügenden Vorzentrierung des abzudichtenden Maschinenelements bei dessen Montage und zu unerwünschten Undichtigkeiten führen kann.

Der erste axiale Abstand kann bei einer derartigen Ausgestaltung der ersten Dichtlippe der Dicke der ersten Lippe entsprechen.

Der Radialflansch kann auf der der ersten Lippe axial abgewandten Seite einen Axialvorsprung aufweisen, auf den eine weitere entsprechend ausgebildete Dichtungsanordnung gleichen Typs kraftschlüssig aufschiebbar ist. Eine derartige Ausgestaltung der Dichtungsanordnung ist für die Verpackung mehrerer Dichtungsanordnungen gleichen Typs von Vorteil. Durch das gegenseitige Aufschieben werden die Dichtungsanordnungen miteinander verbunden und bilden dadurch eine vormontierbare Einheit, die es erleichtert, mehrere Dichtungsanordnungen gleichen Typs platzsparend und sicher zu verpacken. Die Einheiten, die verpackt werden, können bevorzugt aus zwei bis fünf Dichtungsanordnungen gleichen Typs bestehen.

Der Dichtring kann als Radialwellendichtring ausgebildet sein, mit einem Stützkörper aus einem zähharten Werkstoff, der stirnseitig andererseits mit einer dynamisch beanspruchten zweiten Dichtlippe aus elastomerem Werkstoff verbunden ist, wobei sich die erste Dichtlippe und die zweite Dichtlippe mit einem zweiten axialen Abstand benachbart zugeordnet sind. Die zweite Dichtlippe kann, wie bei einem üblichen Radialwellendichtring, aus einem elastomerem Werkstoff bestehen und mit oder ohne Ringwendelfeder ausgebildet sein. Die zweite Dichtlippe und der Axialflansch sind bevorzugt einstückig ineinander übergehend und materialeinheitlich ausgebildet. Die Herstellung des Dichtrings, der einen Bestandteil der Dichtungsanordnung bildet, ist dadurch wesentlich vereinfacht; die Dichtungsanordnung ist dadurch besonders kostengünstig herstellbar.

Die erste Dichtlippe kann durch an sich bekannte Fertigungsverfahren in der Dichtungsanordnung festgelegt sein.

### Kurzbeschreibung der Zeichnung

Ein Ausführungsbeispiel der erfindungsgemäßen Dichtungsanordnung wird nachfolgend anhand der Figuren 1 bis 3 näher erläutert.

Diese zeigen:
- Fig. 1: ein Ausführungsbeispiel einer erfindungsgemäßen Dichtungsanordnung in geschnittener Darstellung,
- Fig. 2: eine perspektivische Ansicht der Dichtungsanordnung aus Fig. 1,
- Fig. 3: drei Dichtungsanordnungen, wie in Fig. 1 dargestellt, die eine Einheit für eine Verpackung bilden.

### Ausführung der Erfindung

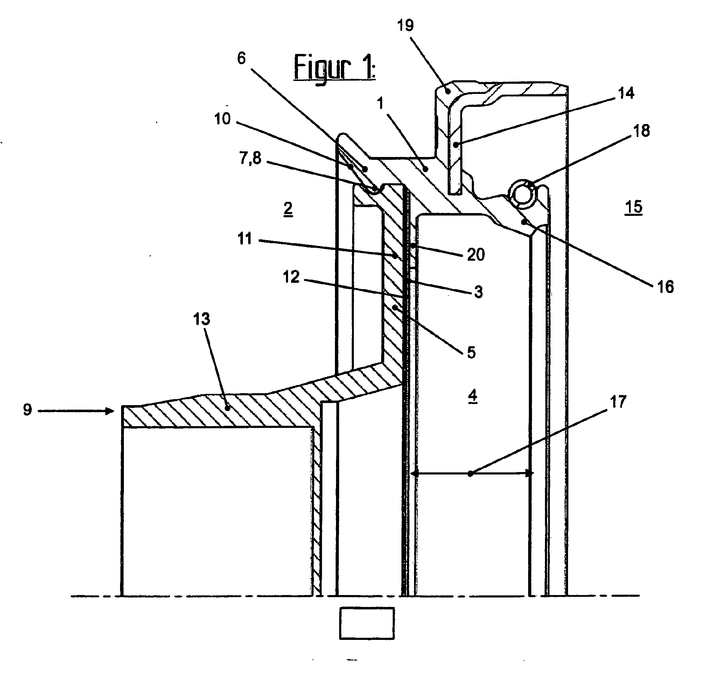

In Fig. 1 ist ein Ausführungsbeispiel einer Dichtungsanordnung gezeigt, die einen Dichtring 1 und einen Verschlussdeckel 5 umfasst.
Der Dichtring 1 ist als Radialwellendichtring ausgebildet und umfasst einen Stützkörper 14, der in dem hier gezeigten Ausführungsbeispiel aus einem metallischen Werkstoff besteht. Die zweite Dichtlippe 16 besteht aus einem elastomeren Werkstoff und ist von einer Ringwendelfeder 18 außenumfangsseitig umschlossen. Die statische Dichtung 19 dichtet gegenüber einem hier nicht dargestellten Gehäuse, beispielsweise einem Getriebegehäuse, ab und ist einstückig und materialeinheitlich mit der zweiten Dichtlippe 16 ausgebildet.
Der Dichtring 1 weist außerdem eine erste Dichtlippe 3 aus PTFE auf, die der zweiten Dichtlippe 16 mit einem zweiten axialen Abstand 17 benachbart zugeordnet ist. Die erste Dichtlippe 3 ist an einem Befestigungsabschnitt 20 des Dichtrings 1 festgelegt.

Um den Verschlussdeckel 5 am Dichtring 1 befestigen zu können, weist der Dichtring 1 einen sich in axialer Richtung erstreckenden Axialflansch 6 auf, der ebenfalls, wie die zweite Dichtlippe 16, die statische Dichtung 19 und der Befestigungsabschnitt 20 aus elastomerem Werkstoff besteht und einstückig in einander übergehend und materialeinheitlich mit den genannten Teilen ausgebildet ist. Der Axialflansch 6 umschließt den Verschlussdeckel 5 außenumfangsseitig und weist einen sich radial nach innen erstreckenden wulstförmigen Rastvorsprung 7 auf, der in eine kongruent gestaltete nutförmige Hinterschneidung 8 eingeschnappt ist. Um den Verschlussdeckel 5 leichter mit dem Dichtring 1 verbinden zu können, ist der Axialflansch 6 mit einer Einführschräge 10 versehen. Während der Montage des Verschlussdeckels 5 in Montagerichtung 9 mit dem Dichtring 1 werden diese beiden Teile durch die Einführschräge 10 selbsttätig zueinander zentriert. Durch die formschlüssige Verbindung von Verschlussdeckel 5 und Dichtring 1 miteinander, sind Verschlussdeckel 5 und Dichtring 1 zerstörungsfrei lösbar miteinander verbunden.

Die erste Dichtlippe 3 ist in Fig. 1 im herstellungsbedingten Zustand gezeigt. Die erste Dichtlippe 3 ist herstellungsbedingt eben und kreisringförmig ausgebildet und erstreckt sich parallel zum Radialflansch 11.
Erfindungswesentlich ist es vorgesehen, dass der Radialflansch 11 die erste Dichtlippe 3 im hier dargestellten Zustand nicht anliegend berührt; der Verschlussdeckel 5 ist der ersten Dichtlippe 3 unmittelbar benachbart und berührungsfrei zugeordnet. Diese unmittelbar benachbarte und berührungsfreie Zuordnung von Verschlussdeckel 5 und erster Dichtlippe 3 hat den Vorteil, dass die erste Dichtlippe 3 durch den Verschlussdeckel nicht verformt und / oder aufgedehnt wird. Speziell dann, wenn die erste Dichtlippe 3 aus PTFE besteht, wäre eine Deformierung durch den Verschlussdeckel besonders nachteilig, weil sich die erste Dichtlippe 3 bei Entfernung des Verschlussdeckels aus der Dichtungsanordnung nicht mehr vollständig in ihre herstellungsbedingte Form begeben würde. Die Vorzentrierung einer Welle bei Einführung in die Dichtungsanordnung wäre dann beeinträchtigt, und während der bestimmungsgemäßen Verwendung des Dichtrings würde durch die Deformierung die Gefahr bestehen, dass die erste Dichtlippe nicht mehr ordnungsgemäß am abzudichtenden Bauteil anliegt und es dadurch zu Undichtigkeiten in diesem Bereich kommt. Der erste axiale Abstand 12 beträgt im hier dargestellten Ausführungsbeispiel 0,3 mm, wobei dieser Abstand 12 der axialen Dicke der ersten PTFE-Dichtlippe 3 entspricht. Durch den nur sehr geringen ersten axialen Abstand 12 werden kompakte Abmessungen der Dichtungsanordnung in axialer Richtung gewährleistet, wobei trotz der geringen axialen Abmessungen der Dichtungsanordnung die erste Dichtlippe 3 vom Verschlussdeckel 5 nicht berührt wird.

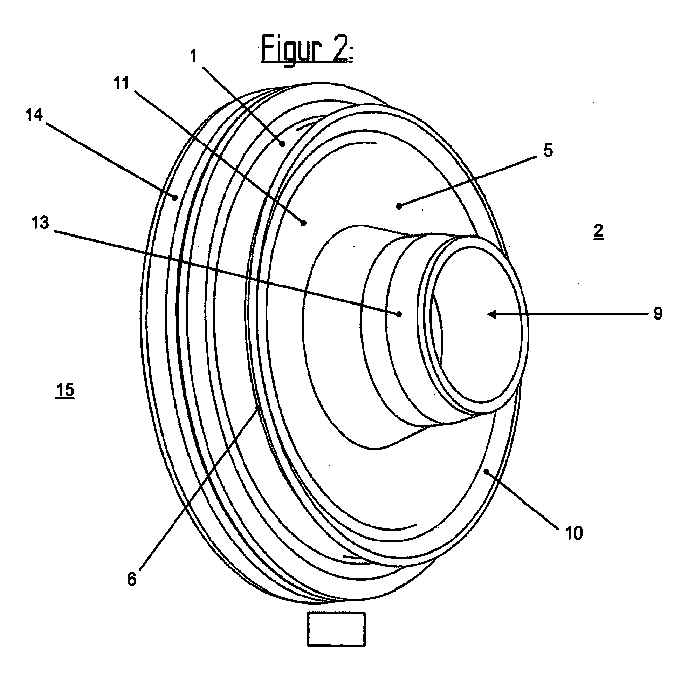

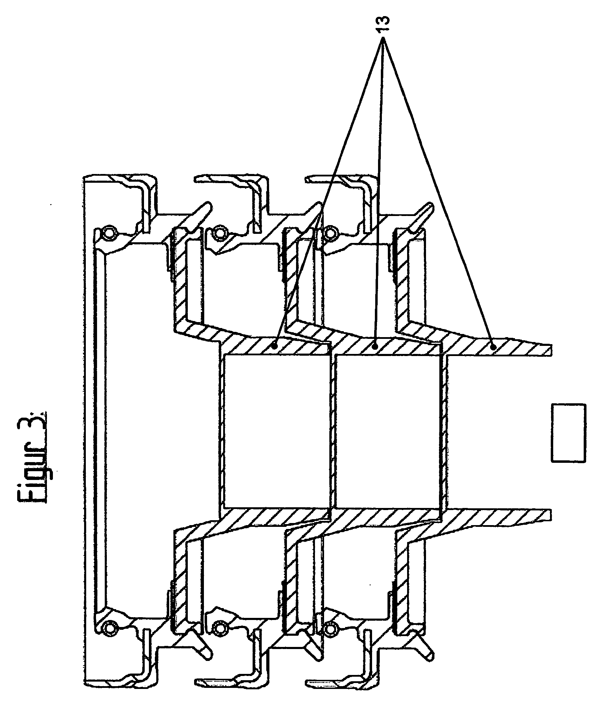

In Fig. 2 ist die Dichtungsanordnung aus Fig. 1 in einer perspektivischen Ansicht gezeigt. Der Radialflansch 11 weist einen Axialvorsprung 13 auf, auf den eine weitere entsprechend ausgebildete Dichtungsanordnung gleichen Typs kraftschlüssig aufschiebbar ist. Eine solche Einheit, bestehend aus mehreren Dichtungsanordnungen gleichen Typs, ist in Fig. 3 gezeigt.

In Fig. 3 sind drei der erfindungsgemäßen Dichtungsanordnungen entsprechend den Fig. 1 und 2 zum Zwecke der besseren Verpackung als Einheit kraftschlüssig miteinander verbunden. Die drei Dichtungsanordnungen sind in axialer Richtung mittels ihrer Axialvorsprünge 13 aufeinander geschoben und können dadurch als Einheit einfach und platzsparend verpackt werden.

## Patentansprüche

1. Dichtungsanordnung, umfassend einen Dichtring (1), der stirnseitig einerseits (2) eine erste Dichtlippe (3) aufweist, die eine Durchbrechung (4) umschließt, wobei die Durchbrechung (4) von einem Verschlussdeckel (5) verschlossen ist, wobei einen Radialflansch aufweist und wobei der Verschlussdeckel der Verschlussdeckel (5) der ersten Dichtlippe (3) unmittelbar benachbart und berührungsfrei zugeordnet ist, **dadurch gekennzeichnet, dass** die erste Dichtlippe (3) aus PTFE besteht und zur Vorzentrierung eines abzudichtenden Bauteils bei dessen Montage herstellungsbedingt eben und kreisringförmig ausgebildet ist und sich parallel zum Radialflansch (11) erstreckt, dass der Verschlussdeckel (5) und der Dichtring (1) formschlüssig miteinander verbunden sind und dass der Dichtring (1) einen sich in axialer Richtung erstreckenden Axialflansch (6) aufweist, der den Verschlussdeckel (5) außenumfangsseitig umschließt und zumindest einen sich radial nach innen erstreckenden Rastvorsprung (7) aufweist, der zumindest in eine Hinterschneidung (8) des Verschlussdeckels (5) einschnappbar ist.

2. Dichtungsanordnung nach Anspruch 1 , **dadurch gekennzeichnet, dass** der Verschlussdeckel (5) und der Dichtring (1) zerstörungsfrei lösbar miteinander verbunden sind.

3. Dichtungsanordnung nach einem der Ansprüche 1 oder 2, **dadurch gekennzeichnet, dass** der Axialflansch (6) in Montagerichtung (9) des Verschlussdeckels (5) eine Einführschräge (10) aufweist.

4. Dichtungsanordnung nach einem der Ansprüche 1 bis 3, **dadurch gekennzeichnet, dass** der Verschlussdeckel (5) einen Radialflansch (11) aufweist, mit dem der Verschlussdeckel (5) im Axialflansch (6) des Dichtrings (1) gehalten ist und dass der Radialflansch (11) der ersten Dichtlippe (3) mit einem ersten axialen Abstand (12) > 0 benachbart zugeordnet ist.

5. Dichtungsanordnung nach Anspruch 4, **dadurch gekennzeichnet, dass** der erste axiale Abstand (12) 0,1 mm bis 1 mm beträgt.

6. Dichtungsanordnung nach einem der Ansprüche 4 bis 5, **dadurch gekennzeichnet, dass** der Radialflansch (11) auf der der ersten Dichtlippe (3) axial abgewandten Seite einen Axialvorsprung (13) aufweist, auf den eine weitere entsprechend ausgebildete Dichtungsanordnung gleichen Typs kraftschlüssig aufschiebbar ist.

7. Dichtungsanordnung nach einem der Ansprüche 1 bis 6, **dadurch gekennzeichnet, dass** der Dichtring (1) als Radialwellendichtring ausgebildet ist, mit einem Stützkörper (14) aus einem zähharten Werkstoff, der stirnseitig andererseits (15) mit einer dynamisch beanspruchten zweiten Dichtlippe (16) aus elastomerem Werkstoff verbunden ist und dass sich die erste Dichtlippe (3) und die zweite Dichtlippe (16) mit einem zweiten axialen Abstand (17) benachbart zugeordnet sind.

## Claims

1. Sealing arrangement comprising a sealing ring (1) which has on one end face (2) a first sealing lip (3) which surrounds a perforation (4), wherein the perforation (4) is closed by a closure cover (5), wherein the closure cover (5) has a radial flange, and wherein the closure cover is assigned directly adjacently and without contact to the first sealing lip (3), **characterized in that** the first sealing lip (3) consists of PTFE and, in order to precentre a component to be sealed off while said component is being mounted, is formed by its production in a flat and circular manner and extends parallel to the radial flange (11), **in that** the closure cover (5) and the sealing ring (1) are connected together in a form-fitting manner, and **in that** the sealing ring (1) has an axial flange (6) which extends in the axial direction, encloses the outer circumference of the closure cover (5) and has at least one latching protrusion (7) which extends radially inwards and which can be snapped into at least one undercut (8) of the closure cover (5).

2. Sealing arrangement according to Claim 1, **characterized in that** the closure cover (5) and the sealing ring (1) are connected together in a non-destructively releasable manner.

3. Sealing arrangement according to either of Claims 1 and 2, **characterized in that** the axial flange (6) has an introduction slope (10) in the mounting direction (9) of the closure cover (5).

4. Sealing arrangement according to one of Claims 1 to 3, **characterized in that** the closure cover (5) has a radial flange (11), by way of which the closure cover (5) is held in the axial flange (6) of the sealing ring, and **in that** the radial flange (11) is assigned adjacently to the first sealing lip (3) at a first axial spacing (12) > 0.

5. Sealing arrangement according to Claim 4, **characterized in that** the first axial spacing (12) is 0.1 mm to 1 mm.

6. Sealing arrangement according to either of Claims 4 and 5, **characterized in that** the side of the radial flange (11) that faces axially away from the first sealing lip (3) has an axial protrusion (13) onto which a further sealing arrangement of the same type and formed in a corresponding manner can be pushed in a force-fitting manner.

7. Sealing arrangement according to one of Claims 1 to 6, **characterized in that** the sealing ring (1) is in the form of a radial shaft sealing ring having a supporting body (14) made of a hard and tough material which is connected at its other end face (15) to a dynamically stressed second sealing lip (16) made of an elastomeric material, and **in that** the first sealing lip (3) and the second sealing lip (16) are assigned adjacently to one another at a second axial spacing (17) .

## Revendications

1. Agencement d'étanchéité, comprenant une bague d'étanchéité (1) qui présente du côté frontal d'une part (2) une première lèvre d'étanchéité (3) qui entoure un orifice (4), l'orifice (4) étant fermé par un couvercle de fermeture (5), le couvercle de fermeture (5) présentant une bride radiale et le couvercle de fermeture étant associé de manière immédiatement adjacente et sans contact à la première lèvre d'étanchéité (3), **caractérisé en ce que** la première lèvre d'étanchéité (3) se compose de PTFE et est réalisée sous forme annulaire circulaire et plane pour des raisons de construction en vue du précentrage d'un composant à étancher lors de son montage, et s'étend parallèlement à la bride radiale (11), **en ce que** le couvercle de fermeture (5) et la bague d'étanchéité (1) sont connectés l'un à l'autre par engagement positif et **en ce que** la bague d'étanchéité (1) présente une bride axiale (6) s'étendant dans la direction axiale, laquelle entoure le couvercle de fermeture (5) sur sa périphérie extérieure et présente au moins une saillie d'encliquetage (7) s'étendant radialement vers l'intérieur, laquelle peut être encliquetée au moins dans une contre-dépouille (8) du couvercle de fermeture (5).

2. Agencement d'étanchéité selon la revendication 1, **caractérisé en ce que** le couvercle de fermeture (5) et la bague d'étanchéité (1) sont connectés l'un à l'autre de manière amovible sans destruction.

3. Agencement d'étanchéité selon l'une quelconque des revendications 1 ou 2, **caractérisé en ce que** la bride axiale (6) présente un biseau d'insertion (10) dans la direction de montage (9) du couvercle de fermeture (5).

4. Agencement d'étanchéité selon l'une quelconque des revendications 1 à 3, **caractérisé en ce que** le couvercle de fermeture (5) présente une bride radiale (11) avec laquelle le couvercle de fermeture (5) est maintenu dans la bride axiale (6) de la bague d'étanchéité (1), et **en ce que** la bride radiale (11) est associée à la première lèvre d'étanchéité (3) de manière adjacente à celle-ci à une première distance axiale (12) > 0.

5. Agencement d'étanchéité selon la revendication 4, **caractérisé en ce que** la première distance axiale (12) vaut 0,1 mm à 1 mm.

6. Agencement d'étanchéité selon l'une quelconque des revendications 4 et 5, **caractérisé en ce que** la bride radiale (11) présente sur le côté opposé axialement à la première lèvre d'étanchéité (3) une saillie axiale (13) sur laquelle peut être enfoncé par engagement par force un autre agencement d'étanchéité de même type réalisé de manière correspondante.

7. Agencement d'étanchéité selon l'une quelconque des revendications 1 à 6, **caractérisé en ce que** la bague d'étanchéité (1) est réalisée sous forme de bague d'étanchéité pour arbre radiale, avec un corps de support (14) constitué d'un matériau rigide qui est connecté du côté frontal d'autre part (15) à une deuxième lèvre d'étanchéité (16) précontrainte dynamiquement en matériau élastomère, et **en ce que** la première lèvre d'étanchéité (3) et la deuxième lèvre d'étanchéité (16) sont associées l'une à l'autre de manière adjacente à une deuxième distance axiale (17).
